# EUROPEAN PATENT APPLICATION

(11) **EP 4 733 656 A1**
(43) Date of publication of application: **29.04.2026**
(21) Application number: 24209177.5
(22) Date of filing: 28.10.2024
(51) Int. Cl.: F17C 11/00

(54) **HVDROGEN STORAGE ASSEMBLY, HYDROGEN STORAGE SYSTEM, AND CONTAINER**

(71) Applicant: GKN Hydrogen GmbH, 53177 Bonn (DE)
(72) Inventor: Schupp, Thomas, 42477 Radevormwald (DE); Zirm, Sebastian, 39040 Vahrn (IT); Leimgruber, Benjamin, 39030 Gais (IT); Aschbacher, Tobias, 39030 Mühlwald (IT)
(74) Representative: WBH Wachenhausen Patentanwälte PartG mbB

(57) **Abstract**

A hydrogen storage assembly (2) comprising multiple hydrogen storage elements (4) and multiple tempering channels (6) is described. Each hydrogen storage element (4) is provided with a tempering channel (6) for tempering the hydrogen storage element (4) with a tempering fluid guided through the tempering channel (6). Each tempering channel (6) comprises a hydraulic resistance for the tempering fluid, wherein each tempering channel (6) comprises a passive hydraulic element (10). The hydraulic resistance in each tempering channel (6) is dominated by the passive hydraulic element (10). All tempering channels (6) comprise a hydraulic resistance within a certain range. Furthermore, a hydrogen storage system (50) comprising such a hydrogen storage assembly (2) is described. Furthermore, a container (100) comprising such a hydrogen storage system (50) is described.

## Description

### Technical field

A hydrogen storage assembly comprising multiple hydrogen storage elements and multiple tempering channels is described. Furthermore, a hydrogen storage system comprising such a hydrogen storage assembly is described. Furthermore, a container comprising such a hydrogen storage system is described.

### Background of the invention

Faced with the challenges of climate change, hydrogen storage systems provide an economic way of storing energy produced by renewable energy sources, such as a wind power plant or a PV power plant. Some of the hydrogen storage systems used for such applications comprise and use metal hydrides for storing hydrogen. For hydrogenation and/or dehydrogenation of the metal hydride, temperature of the metal hydride must be controlled. For this, hydrogen storage systems used nowadays use tempering channels for guiding a tempering fluid through the tempering channel for tempering the metal hydrides.

Large scale hydrogen storage systems comprise multiple hydrogen storage elements, wherein each hydrogen storage element comprises at least one tempering channel for tempering the metal hydride, for instance in the form of metal hydride pellets, located inside a hydrogen storage element. The hydrogen storage elements are for instance formed cylindrically and are arranged parallel to each other. For optimally tempering the metal hydrides within the whole hydrogen storage assembly comprising the multiple hydrogen storage elements, equal or substantially equal distribution of the tempering fluid through various tempering channels of the various hydrogen storage elements must be achieved. This is normally done by designing and dimensioning path lengths of the tempering channels substantially equally and with a substantially equal cross section of the tempering channels, such that a hydraulic resistance for the tempering fluid is equal or is substantially equal for all tempering channels.

### Summary of the invention

A first aspect relates to a hydrogen storage assembly comprising multiple hydrogen storage elements and multiple tempering channels. Each hydrogen storage element may comprise one or more hydrogen storage components, such as metal hydride pellets for storing and releasing hydrogen.

Each hydrogen storage element is provided with a tempering channel, for instance at least one tempering channel, for tempering the hydrogen storage element with a tempering fluid guided through the tempering channel. Each hydrogen storage element may comprise at least one tempering channel. The tempering channel may be located and/or arranged at an outer circumference of the hydrogen storage component. The tempering fluid may be guided through at least one tempering channel of the hydrogen storage element, for instance through all tempering channels of the hydrogen storage element. The tempering fluid may be water, for instance mixed with glycol for antifreeze protection. By tempering the hydrogen storage element with the tempering fluid, hydrogenation and/or dehydrogenation of the metal hydride pellets may be controlled. Tempering may be heating and/or cooling the hydrogen storage element, especially the metal hydride pellets as the hydrogen storage components.

Each tempering channel comprises a hydraulic resistance for the tempering fluid. The hydraulic resistance of each tempering channel may be defined by the shape and/or size of the tempering channel, for instance the shape and/or size of pipes forming the tempering channel.

Each tempering channel comprises a passive hydraulic element. A passive hydraulic element may be a hydraulic element which is non-adjustable. For instance, after producing or manufacturing the passive hydraulic element with certain properties, the passive hydraulic element may be non-adjustable.

The hydraulic resistance in each tempering channel is dominated by the passive hydraulic element. For instance, the hydraulic resistance of the tempering channel may be increased by a factor of 5 or 10 due to the passive hydraulic element. For instance, a pressure drop due to the passive hydraulic element may be 5 or 10 times larger than an expected pressure drop throughout the rest of the tempering channel without the passive hydraulic element, for instance at locations of the tempering channel, where the passive hydraulic element is not located.

All tempering channels comprise a hydraulic resistance within a certain range. All tempering channels may comprise a hydraulic resistance which is substantially identical, preferably identical. The certain range may be defined relatively. For instance, the hydraulic resistance of the tempering channel with the smallest hydraulic resistance of all tempering channels may have a hydraulic resistance, which is for instance 5% or 10% smaller than a hydraulic resistance of the tempering channel with the highest hydraulic resistance of all tempering channels. Alternatively, the certain range may be defined in absolute terms. For instance, the hydraulic resistance may be defined via a pressure drop. The certain range may thus be defined as a certain absolute value of a pressure drop. For example, the difference of the tempering channel with the smallest hydraulic resistance, i.e. the thus smallest pressure drop, and the tempering channel with the highest hydraulic resistance, i.e. the highest pressure drop, may be less than said defined pressure drop.

With such a hydrogen storage assembly, a practical equal distribution of the tempering fluid is achieved when using multiple hydrogen storage elements with multiple tempering channels. In contrast to conventional hydrogen storage assemblies, no active hydraulic elements must be used for achieving this goal. Thus, a simplified hydrogen storage assembly can be used. For instance, the hydrogen storage assembly as described above may be independent and/or constructed without compensation valves within the tempering channels for achieving the equal distribution of the tempering fluid.

Using such passive hydraulic elements for achieving a hydraulic resistance in all tempering channels within a certain range may be necessary as production tolerances of the tempering channels of the several multiple hydrogen storage elements cause different hydraulic resistances of the tempering channels of the hydrogen storage elements when used without the passive hydraulic element. This would cause an unequal distribution of the tempering fluid throughout the multiple tempering channels of the multiple hydrogen storage elements. Without using the passive hydraulic elements, some hydrogen storage elements, and thus for instance the metal hydride pellets therein, may be tempered differently than others of the hydrogen storage assembly. For instance, a cooling and/or heating of the metal hydride pellets of the hydrogen storage assembly may not be performed equally and/or uniformly throughout the whole hydrogen storage assembly. Thus, hydrogenation and/or dehydrogenation would be preferred in some of the hydrogen storage elements compared to other hydrogen storage elements of the same hydrogen storage assembly. This would be disadvantageous as the hydrogen storage assembly would thus not be used to its full capacity and/or could be damaged easily.

By adding the passive hydraulic elements which dominate the hydraulic resistance in each tempering channel, the overall hydraulic resistance of the tempering channels may be increased. Thus, the overall pressure drop within each tempering channel may be increased by adding the passive hydraulic elements to the tempering channels. However, this may compensate the unequal distribution of the tempering fluid present when not using the passive hydraulic elements in the tempering channels.

By using passive hydraulic elements, for instance purely passive hydraulic elements without any active component for dominating the hydraulic resistance in each tempering channel, a robust, simple and cheap solution for equally and/or uniformly tempering the hydrogen storage elements of the hydrogen storage assembly is achieved.

Active compensation valves and/or chokes, such as hydraulic chokes, may achieve the same result of a hydraulic resistance of the tempering channel being within a certain range. However, in such an arrangement, active hydraulic elements, such as these valves and/or chokes, usually need to be adjusted manually for achieving the goal. Alternatively, a flow control valve can be used, which is a complex and expensive component. This is a complex, cumbersome and expensive task. With the provided hydrogen storage assembly as described, this adjustment of the passive hydraulic elements is not necessary for achieving the goal. With this described hydrogen storage element, equal flow of the tempering fluid through all tempering channels of all hydrogen storage elements of the hydrogen storage assembly may be achieved for equally tempering the metal hydride pellets.

According to an embodiment, each passive hydraulic element is an orifice with a certain size and/or shape. For instance, the orifice may have a certain diameter of an opening of the orifice, wherein the tempering fluid passes through the opening. Furthermore, the orifice may have a certain shape, such as circular or edged shape. All passive hydraulic elements may be orifices, for instance with a substantially identical, preferably identical, size and/or shape. By using an orifice as a passive hydraulic element, the hydraulic element may be designed as a passive hydraulic element in a very simple manner.

The passive hydraulic element may be a screwing nozzle and/or a diaphragm plate and/or baffle plate. The passive hydraulic element may be created by an ablative process. For instance, when drilling a hole in one part of the hydrogen storage assembly, the hole may constitute the passive hydraulic element.

According to an embodiment, the size and/or shape of the orifice is dependent on a number and/or a spatial arrangement of the hydrogen storage elements. For instance, a first hydrogen storage assembly may have 25 hydrogen storage elements arranged in five rows and five columns. A second hydrogen storage assembly differing from the first hydrogen storage assembly may have 100 hydrogen storage elements, arranged in ten rows and ten columns. Another, third hydrogen storage assembly may have hydrogen storage elements arranged not in rows and columns but in a circular manner with a central hydrogen storage element and other hydrogen storage elements arranged concentrically around this central hydrogen storage element. The size and/or shape of orifices for each of those three hydrogen storage assemblies may differ.

The size and/or shape of the orifice, or another component or means as passive hydraulic element, may be determined by a simulation and/or may be predefined. In the simulation, a CFD calculation of fluid input into the hydrogen storage elements and pressure drops in the hydrogen storage elements and the tempering channels may be performed/calculated. The pressure drops may be for instance determined and calculated for each tempering channel of all hydrogen storage elements. Then, the size and/or shape of the orifice may be determined based on this pressure drop of the tempering fluid inside of all tempering channels.

The size and/or shape may be optimized for a standard operating point of the hydrogen storage assembly. For instance, for a first operating point of the hydrogen storage assembly, for instance a certain first optimal tempering fluid flow through the tempering channels, a first size and/or a first shape of the orifice may be determined. For a second operating point, different from the first operating point, a second size and/or a second shape of the orifice may be determined, wherein the first and second size may be different and/or the first and second shape may be different. The determined size and/or shape of the orifice may be tested and/or verified on a test stand.

Furthermore, determining the size and/or shape of the orifice may also be dependent on the heating and cooling of the hydrogen storage elements. For instance, the flow of the tempering fluid for heating may be different from the flow of the tempering fluid for cooling the hydrogen storage elements. Thus, both, heating and cooling, may be taken into account when determining the size and/or shape of the orifice.

With such an orifice with a certain size and/or shape, substantially equal, preferably equal and/or uniform, flow of the tempering fluid through all tempering channels is achieved. For instance, the flow is within a range of for instance ± 5%, ± 10% or ± 20%. Validation that this flow is actually achieved may be done by ultrasonic measurements and/or determining the flow rate of the tempering fluid.

According to another embodiment, the hydrogen storage assembly can be configured such that a certain type of flow, being laminar or turbulent, of the tempering fluid through the tempering channels can be effected. The type of flow can be determined by the hydrogen storage assembly, for example by the passive hydraulic element, for instance by the size and/or shape of the passive hydraulic element. The simulation can determine a configuration of the hydrogen storage assembly to effect either laminar or turbulent flow, for example for a certain volume flow or volume flow rate of the tempering fluid through the tempering channel. For instance, the configuration may be determined by the simulation such that a turbulent flow is effected for a first volume flow and a laminar flow is effected by the same hydrogen storage assembly for a second volume flow being different to the first volume flow. Thus, the type of flow can be changed by changing the volume flow, for instance with a pump. This can be achieved with the same hydrogen storage assembly, for example with the same passive hydraulic element, for example with the same orifice. A laminar flow may cause less energy usage of the pump, while a turbulent flow may cause an improved heat transfer. Thus, the type of flow can be changed or switched based on to be transmitted energy or heat.

According to an embodiment, the passive hydraulic element is removable from the tempering channel. For instance, the passive hydraulic element may be a modular element which can be introduced in a flow path of the tempering fluid within the tempering channel. Preferably, the hydraulic resistance of the tempering channel with the passive hydraulic element is higher, preferably five or ten times higher, than the hydraulic resistance of the tempering channel without the passive hydraulic element. With such a configuration, the overall hydraulic resistance for the tempering fluid being guided through all tempering channels of the hydrogen storage assembly is higher, but at the same time, the hydraulic resistance of all tempering channels is within a certain range. Thus, overall uniform flow of tempering fluid guided through all tempering channels is achieved.

According to an embodiment, all passive hydraulic elements have substantially an identical hydraulic resistance, preferably an identical hydraulic resistance. Having substantially an identical hydraulic resistance may mean that a pressure drop in the tempering channel and/or the passive hydraulic element with the smallest hydraulic resistance is 5%, 10% or 20% smaller than a pressure drop of the tempering channel and/or the passive hydraulic element with the highest hydraulic resistance. For instance, all passive hydraulic elements have a hydraulic resistance within a certain range, for instance 5%, 10% or 20%. For instance, all passive hydraulic elements are orifices, meaning that each passive hydraulic element is exactly one orifice. For instance, each tempering channel comprises exactly one orifice. For each orifice in all tempering channels of all hydrogen storage elements, the same size and/or shape, especially the same size and shape, is used. Thus, the hydraulic resistance of all orifices is identical. As the hydraulic resistance of the orifice dominates the hydraulic resistance of the overall tempering channel in which the orifice is located, the hydraulic resistance of all tempering channels is substantially identical, especially identical or at least within a certain range.

By using the same orifice with the same size and/or shape for all tempering channels, the system complexity is reduced as the same orifice can be used for all tempering channels. The best size and/or shape may be determined by simulation, such that an overall pressure drop in all tempering channels of the hydrogen storage assembly is minimized but at the same time, the hydraulic resistance within each tempering channel is dominated by the passive hydraulic element, herein the orifice. Thus, all tempering channels, although they might comprise different hydraulic resistances without the passive hydraulic elements, comprise substantially the same hydraulic resistance when the passive hydraulic element is part of the tempering channels. The best size and/or shape of the orifice is determined based on the simulation and chosen for all orifices of all tempering channels.

According to an embodiment, the hydrogen storage assembly further comprises a main fluid inlet and a main fluid outlet. The main fluid inlet and/or main fluid outlet may be fluidly connected to at least one of a pump and a tempering device. The tempering device may be configured for tempering the tempering fluid, for instance cooling and/or heating the tempering fluid. The pump may be configured for pumping the tempering fluid, for instance through the tempering channels. The main fluid inlet and the main fluid outlet may be fluidly connected to the tempering channels. The main fluid inlet may be fluidly connected to all tempering channels. The main fluid outlet may be fluidly connected to all tempering channels. Different fluid paths, preferably all fluid paths, from the main fluid inlet to the main fluid outlet passing through the tempering channels, preferably passing through all of the tempering channels, are substantially equally long, preferably equally long. For instance, equally long pipes as tempering channels may be used, for instance with the same inner diameter and/or shape and/or the same length. By using substantially equally long fluid paths for the tempering fluid, a somewhat identical hydraulic resistance is already provided due to the construction of the tempering channels itself and the overall construction of the hydrogen storage assembly. Due to production tolerances of the tempering channels, for instance the pipes used for the tempering channels, the passive hydraulic element is still necessary for all tempering channels for having a hydraulic resistance within a certain range.

According to an embodiment, the hydrogen storage assembly further comprises an inflow pipe and an outflow pipe. The inflow pipe and the outflow pipe may have the same or a different size and/or inner diameter. The main fluid inlet may be fluidly connected to the tempering channels via the inflow pipe. For instance, the inflow pipe may be fluidly connected to all tempering channels via intersections. The tempering channels may be fluidly connected to the main fluid outlet via the outflow pipe. For instance, the tempering channels may be fluidly connected to the outflow pipe via intersections. The fluid paths, preferably all fluid paths, comprise a Z-configuration. The fluid paths, preferably all fluid paths, may comprise at least one Z-configuration, for instance exactly one or more than one Z-configuration. The tempering channels may be substantially arranged in parallel to one another. For instance, the hydrogen storage elements being configured as mainly cylindrical elements may be arranged in parallel to one another and for instance stacked within the hydrogen storage assembly. The inflow pipe and the outflow pipe may be substantially arranged in parallel to one another. The tempering channels may be arranged at a certain angle, preferably at a rectangular angle, relative to the inflow pipe and the outflow pipe. With such a configuration, the Z-configuration of the fluid paths through the inflow pipe, the tempering channels and the outflow pipe may be arranged. For this Z-configuration, the main fluid inlet may be arranged diagonally on another side of the hydrogen storage assembly with respect to the main fluid outlet. With such a Z-configuration, substantially equal or equal path lengths through at least some, preferably all, tempering channels is achieved. This may be achieved in an easy configuration, which is easily constructed and/or cheaply constructed.

According to an embodiment, the tempering channels are arranged in rows and/or columns and the Z-configuration is provided along the rows and/or columns. For instance, a first Z-configuration is provided along the rows. A second Z-configuration is provided along the columns. Wherein a two-dimensional Z-configuration may be a two-dimensional arrangement of fluid paths and thus tempering channels and inflow and outflow pipes, a three-dimensional Z-configuration with two Z-configurations may be a three-dimensional arrangement of fluid paths and thus tempering channels, inflow pipes and outflow pipes. For instance, with such a three-dimensional Z-configuration, having two Z-configurations arranged in different directions, substantially equally long or preferably equally long path lengths of the tempering channels, may be achieved, even for hydrogen storage elements not only provided in one plane and only along columns or rows but also for hydrogen storage elements arranged in a volume along columns and rows.

According to an embodiment, each tempering channel comprises a passive hydraulic element located at an entry of the tempering channel, preferably at or near a fluid intersection of the inflow pipe and the tempering channel. The entry of the tempering channel may be defined as the first section of the tempering channel after the fluid intersection. For instance, the passive hydraulic element may be located within the first 5%, 10% or 20% of a fluid path through the tempering channel. The fluid intersection may be configured as the passive hydraulic element, for instance as an orifice and may be constructed such that it already includes the orifice. The passive hydraulic element may be located at a flow pipe of the tempering channel.

Alternatively, or additionally, each tempering channel comprises a passive hydraulic element located at an exit of the tempering channel, preferably at or near a fluid intersection of the outflow pipe and the tempering channel. The exit of the tempering channel may be defined as the last section of the tempering channel before the fluid intersection. For instance, the passive hydraulic element may be located within the last 5%, 10% or 20% of a fluid path through the tempering channel. The fluid intersection may be configured as the passive hydraulic element, for instance as an orifice and may be constructed such that it already includes the orifice. The passive hydraulic element may be located at a return pipe of the tempering channel.

According to an embodiment, the hydrogen storage assembly may comprise a tempering channel which comprises at least one passive hydraulic element at an entry of the tempering channel and at least one passive hydraulic element at an exit of the tempering channel. The hydraulic resistance being dominated by the passive hydraulic element may thus be effected by both passive hydraulic elements being located at the entry and at the exit.

With such a hydrogen storage assembly with the passive hydraulic element located at an entry of the tempering channel, the reachability of the passive hydraulic element, for instance of the orifice, is improved. For instance, the orifice may be removed easily from the tempering channel. Thus, the passive hydraulic element may be exchanged easily.

For instance, in a first arrangement of several hydrogen storage elements within the hydrogen storage assembly, a first orifice with a first size and a first shape is used for all hydrogen storage elements. Later on, some of those hydrogen storage elements are used for a second, different hydrogen storage assembly. For instance, more hydrogen storage elements are used for the second hydrogen storage assembly than for the first hydrogen storage assembly. Thus, the size and/or shape of a second orifice is determined based on the second configuration of the second hydrogen storage assembly. The size and/or shape of the first and second orifices may differ. By the easy accessibility of the orifice at the entry of the tempering channel, the orifice may be exchanged for certain hydrogen storage elements being reused from the first hydrogen storage assembly. Thus, the modularity for this hydrogen storage assembly is improved, such that for instance a new configuration of hydrogen storage elements is easily achievable. With the second orifice, another pressure drop and/or hydraulic resistance can be introduced into the tempering channels comparing to the first orifice.

A second aspect relates to a hydrogen storage system comprising a hydrogen storage assembly according to an embodiment of the first aspect. Furthermore, the hydrogen storage system comprises a tempering circuit for circulating a tempering fluid through the tempering channels of the hydrogen storage assembly. Further features or advantages of the second aspect can be deducted from features and advantages of the first aspect. Furthermore, features and advantages of the second aspect constitute features and advantages of the first aspect.

According to another embodiment, the hydrogen storage system further comprises an electrolyzer for generating hydrogen to be stored in the hydrogen storage assembly. Furthermore, the hydrogen storage system comprises a fuel cell for generating electricity on the basis of the hydrogen stored in the hydrogen storage assembly.

A third aspect relates to a container comprising a hydrogen storage system according to an embodiment of the second aspect. Further features or advantages of the third aspect can be deducted from features and advantages of the first and second aspect. Furthermore, features and advantages of the third aspect constitute features and advantages of the first and second aspect.

### Brief description of the drawings

Fig. 1 schematically shows a container comprising a hydrogen storage system with a hydrogen storage assembly.
Fig. 2 shows a hydrogen storage assembly as schematically depicted in Fig. 1.
Fig. 3 shows a hydrogen storage element of the multiple hydrogen storage elements of the hydrogen storage assembly shown in Fig. 2.
Fig. 4 shows a sectional view of a hydrogen storage element depicted in Fig. 3.
Fig. 5 schematically shows fluid paths of the hydrogen storage assembly shown in Fig. 2.

### Detailed description of embodiments

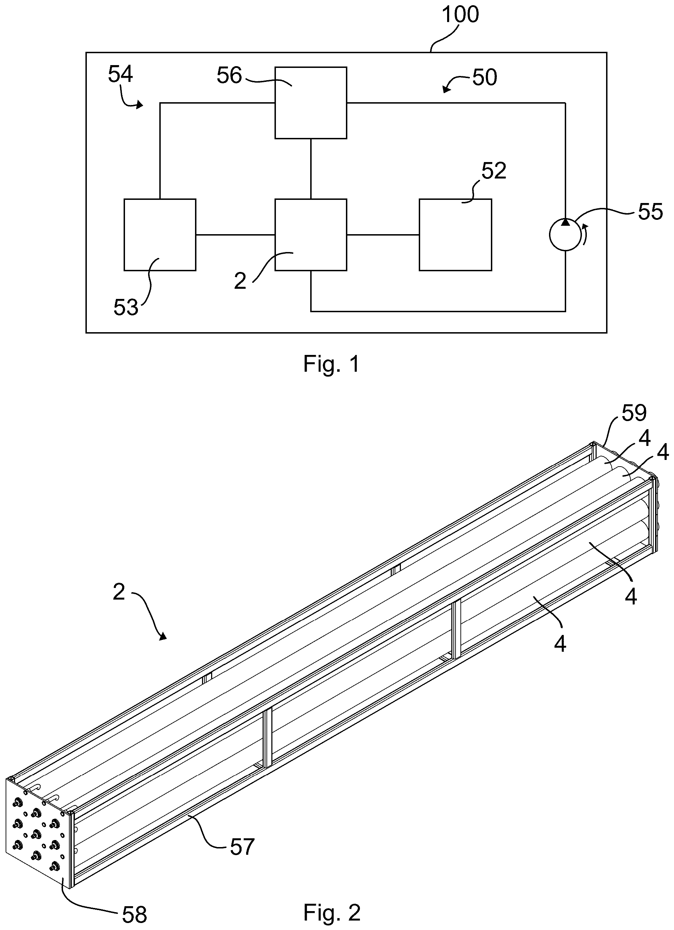

Fig. 1 schematically shows a container 100 comprising a hydrogen storage system 50 according to an embodiment of the present invention. The hydrogen storage system 50 comprises a hydrogen storage assembly 2 for storing hydrogen, an electrolyzer 52 for generating hydrogen from water via electrolysis, and a fuel cell 53 for generating electrical power on the basis of a chemical reaction of hydrogen and oxygen. Instead of the electrolyzer 52, any other means for generating hydrogen from water may be used. Instead of the fuel cell 53, any other means for generating electrical power on the basis of hydrogen and oxygen may be used, for instance a combustion engine with a generator. The hydrogen storage system 50 is configured to generate hydrogen with the electrolyzer 52, to store the generated hydrogen in the hydrogen storage assembly 2, and to generate electricity based on the stored hydrogen with the fuel cell 53. Furthermore, the hydrogen storage system 50 comprises a tempering circuit 54 with a pump 55 for circulating a tempering fluid through the hydrogen storage assembly 2 and a tempering device 56 for cooling and heating said tempering fluid. In the present embodiment, the tempering fluid is water, which may be mixed with glycol as frosting agent. For heating the tempering fluid via the tempering device 56, waste heat of the fuel cell 53 may be utilized. In the present embodiment, the hydrogen storage assembly 2 of the hydrogen storage system 50 shown in Fig. 1 may comprise one or multiple of the hydrogen storage assemblies 2 as shown in Fig. 2, which may be stacked on one another.

Fig. 2 shows a hydrogen storage assembly 2 according to an embodiment of the present invention. The hydrogen storage assembly 2 comprises a support frame 57 with four support bars arranged in a squared arrangement with respect to each other. The longitudinal bars are connected to each other with several crossbars as indicated in Fig. 2. At one of the frontal surfaces of the supporting frame 57, a mounting plate 58 is attached, which is shown on the lefthand side of the hydrogen storage assembly 2. At the opposite frontal surface, the supporting frame 57 comprises multiple support sockets 59. The mounting plate 58 and the support sockets 59 support multiple hydrogen storage elements 4, presently nine hydrogen storage elements 4, within a volume closed by the support frame 57. The hydrogen storage assembly 2 shown in Fig. 2 may comprise a housing (not shown), which may encapsulate the entire support frame 57. The housing may be flooded with a loose thermal insulation material to thermally insulate the hydrogen storage elements 4 from each other and/or from the environment. Additionally, or alternatively, on an inside and/or an outside of the housing, one or multiple thermal insulation elements, e.g., thermal insulation plates, may be attached for insulating the hydrogen storage elements from the environment.

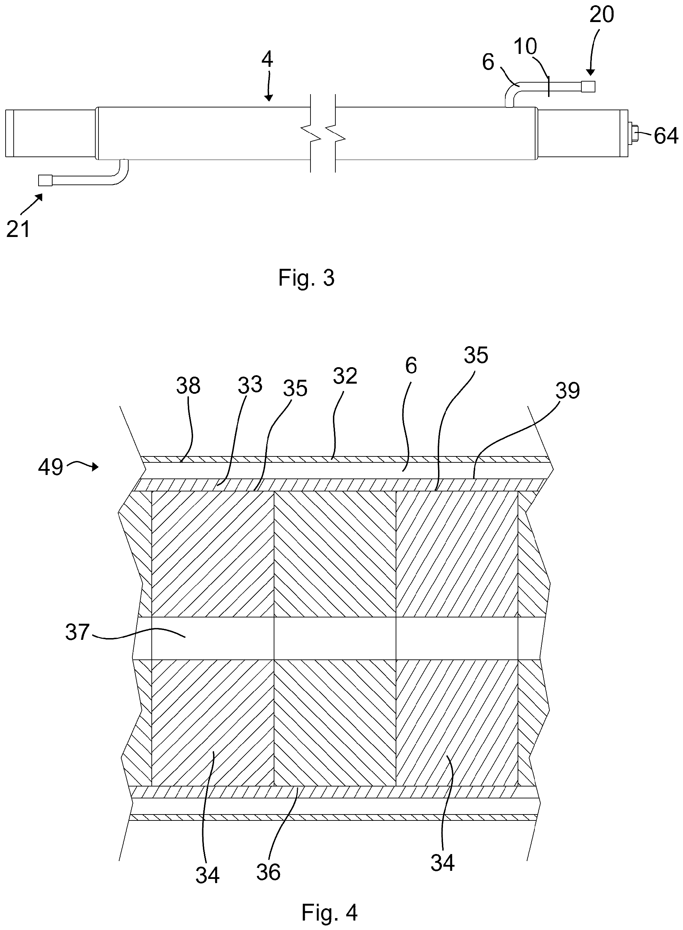

Fig. 3 shows a hydrogen storage element 4. The hydrogen storage element 4 comprises a hydrogen opening 64 via which hydrogen may be fed into the hydrogen storage element 4 from the electrolyzer 52, and via which hydrogen may be discharged from the hydrogen storage element 4 to be conveyed to the fuel cell 53. The hydrogen storage element 4 comprises a tempering channel 6. The tempering channel 6 enters the hydrogen storage element 4 on the right side, passes through the hydrogen storage element 4 from the right to the left and exits the hydrogen storage element 4 on the left side. Via an entry 20 of the tempering channel 6, the tempering fluid is guided through the tempering channel 6, thereby through the hydrogen storage element 4, and then to an exit 21 of the tempering channel 6. Further shown is a passive hydraulic element 10 located at the entry 20. In an alternative embodiment, which is not shown in the Figs., a passive hydraulic element 10 can be located at the exit 21 of the tempering channel 6.

The hydrogen storage element 4 as shown in Fig. 3 comprises a hydrogen storage arrangement 49, a portion of which is shown in Fig. 4. The hydrogen storage arrangement 49 comprises a vessel portion 33, which is formed as a conduit with a circular cross-section in the present embodiment. The vessel portion 33 extends along the entire length of the hydrogen storage element 4. Within the vessel portion 33, a plurality of hydrogen storage components 34 is provided. In the embodiment, the hydrogen storage components are metal hydride pellets. The hydrogen storage components 34 have a cylindrical shape with a lateral surface 35. All of the components 34 have the same diameter and are stacked on one another to form a large cylinder having a height corresponding to a stacking length of the components 34. The lateral surfaces 35 of all of the components 34 are in physical contact with an inner vessel surface 36 of the vessel portion 33. Furthermore, as derivable from Fig. 4, each of the components 34 comprises a central hole 37 extending through the entire component 34 in the height direction thereof. When stacking the components 34 onto each other, a central channel is formed by the holes 37 of the different components 34, said central channel being aligned with the hydrogen opening 64 at a frontal surface of the hydrogen storage element 4. The hydrogen opening 64 is provided concentrically to the entire hydrogen storage element 4. Therefore, when introducing hydrogen through the hydrogen opening 64 into the hydrogen storage element 4, the hydrogen is distributed to all of the components 34 via the central channel formed by the central holes 37. Likewise, when removing hydrogen from the hydrogen storage element 4, at least a majority of the hydrogen may be extracted via the central holes 37 and the hydrogen opening 64 from the hydrogen storage element 4.

Furthermore, the hydrogen storage arrangement 49 comprises a piping portion 32 that is formed as a conduit with a circular cross-section. While the vessel portion 33 extends along the entire length of the hydrogen storage components 34, the piping portion 32 extends at least along 80%, preferably along more than 90%, of the stack length of the components 34. The piping portion 32, the vessel portion 33, and the hydrogen storage components 34 are arranged concentrically with respect to each other. The piping portion 32 is provided on the outside of the vessel portion 33 and comprises an inner piping surface 38. The inner piping surface 38 of the piping portion 32 and an outer vessel surface 39 of the vessel portion 33 form the tempering channel 6 as described above. The tempering channel 6 is arranged concentrically around the components 34. In the present embodiment, the tempering channel 6 is formed as an annular channel extending along the longitudinal direction of the hydrogen storage arrangement 49. At one end of the tempering channel 6, the entry 20 is located, and on another end of the tempering channel 6, the exit 21 is located as described above.

The tempering channel 6 of the hydrogen storage elements 4 is fluidly connected to the tempering circuit 54 as described in Fig. 1. The entry 20 and the exit 21 of each of the hydrogen storage elements 4 are connected in parallel to each other such that the tempering fluid of the tempering circuit 54 enters all of the entries 20 of all hydrogen storage element 4 as shown in Fig. 2 at approximately the same time. Likewise, the tempering fluid exits the tempering channels 6 of the hydrogen storage elements 4 via the exits 21 at approximately the same time. As can be seen in Fig. 3, the entry 20 and the exit 21 of the hydrogen storage element 4 are provided at opposite sides of said element 4 in lengthwise direction. Furthermore, in height direction of the hydrogen storage element 4, the entry 20 and the exit 21 are provided on opposite sides. With such a configuration, the tempering channels 6 of the hydrogen storage elements 4 can be easily vented and drained via the entries 20 and the exits 21.

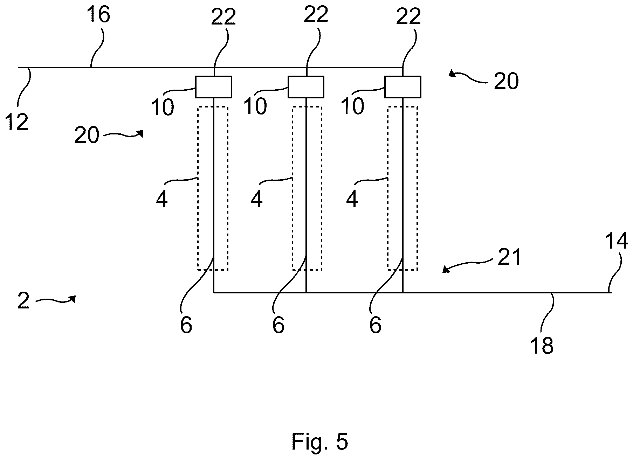

Fig. 5 schematically shows at least a part of the hydrogen storage assembly 2 comprising multiple hydrogen storage elements 4 and multiple tempering channels 6. As shown in Fig. 5, three hydrogen storage elements 4 are arranged in a row. Furthermore, the tempering channels 6, wherein each hydrogen storage element 4 is provided with one tempering channel 6 for tempering the hydrogen storage element 4 with the tempering fluid guided through the tempering channel 6, are arranged in a row. As depicted in Fig. 2, multiple hydrogen storage elements 4 are also arranged in columns, however this configuration is not shown in Fig. 5 for clarity reasons. In such a configuration, tempering channels 6 are arranged in rows and columns.

Furthermore, Fig. 5 shows a main fluid inlet 12 and a main fluid outlet 14 which are fluidly connected to the tempering channels 6. The main fluid inlet 12 is also fluidly connected to the tempering device 56. The main fluid outlet 12 is also fluidly connected to the pump 55. Furthermore, the hydrogen storage assembly 2 comprises an inflow pipe 16 and an outflow pipe 18. The main fluid inlet 12 is fluidly connected to the tempering channels 6 via the inflow pipe 16. The tempering channels 6 are fluidly connected to the main fluid outlet 14 via the outflow pipe 18. The inflow pipe 16 is fluidly connected to the tempering channels 6 via fluid intersections 22. At the entry 20 of each of the tempering channels 6, the passive hydraulic element 10 is located. The passive hydraulic element 10 is part of each tempering channel 6. The exit 21 is shown at an end of each tempering channel 6 close to an intersection of the tempering channel 6 with the outflow pipe 18. The tempering channels 6 as shown in Fig. 5 are primarily, though not completely, located inside of the respective hydrogen storage element 4.

Each passive hydraulic element 10 can be an orifice 10 with a certain size and shape. Alternatively, or additionally, any other component or means can be used as passive hydraulic element 10. For instance, a hole in an outer wall of the hydrogen storage element 4 can constitute the passive hydraulic element 10. For example, for fluidly connecting the hydrogen storage element 4 with the rest of the piping, as can be seen in Fig. 3, a hole must be drilled in an outer wall of the hydrogen storage element 4. By using the hole as the passive hydraulic element 10, an additional component can be omitted, such as an orifice 10 as additional component as explicitly shown in Fig. 3.

The size and shape of the orifice 10 is dependent on a number and spatial arrangement of the hydrogen storage elements 4. In this configuration, three hydrogen storage elements 4 are provided in a row within the hydrogen storage assembly 2. Thus, the orifice 10 has a certain size and shape. When also considering the three columns of hydrogen storage elements 4 as shown in Fig. 2, the orifice 10 could have another size and/or shape. In another embodiment of the hydrogen storage assembly 2, another number of hydrogen storage elements 4 is provided in another spatial arrangement of the hydrogen storage elements 4, for instance arranged concentrically. For such a hydrogen storage assembly 2, another orifice 10 with another size and/or shape would be provided.

The passive hydraulic element 10, here the orifice 10, is removable from the tempering channel 6. Furthermore, the passive hydraulic element 10 is located at the entry 20 of each of the tempering channels 6. The passive hydraulic element 10 is hereby located near the fluid intersection 22. In another embodiment, the passive hydraulic element 10 is located at the fluid intersection 22. For instance, the fluid intersection 22 is configured as the passive hydraulic element 10 comprising the orifice 10.

All passive hydraulic elements 10 have substantially an identical hydraulic resistance. Furthermore, a hydraulic resistance in each tempering channel 6 is dominated by the passive hydraulic element 10. Thus, all tempering channels 6 comprise a hydraulic resistance for the tempering fluid within a certain range. The hydraulic resistance of the tempering channels 6 with the passive hydraulic element 10 is higher, preferably five or ten times higher, than the hydraulic resistance of the tempering channel 6 without the passive hydraulic element 10.

Furthermore, Fig. 5 shows different fluid paths for the tempering fluid through the tempering channels 6. For instance, a first fluid path passes through a first and leftmost tempering channel 6 shown in Fig. 5, a second fluid path flows through the second leftmost tempering channel 6 shown in Fig. 5 and so on. Thus, three different fluid paths for the tempering fluid are shown in Fig. 5. All of those fluid paths from the main fluid inlet 12 to the main fluid outlet 14 passing through the tempering channels 6 are substantially equally long. Furthermore, the fluid paths, herein all fluid paths, comprise a Z-configuration. Herein, the tempering channels 6 are substantially arranged parallel to one another. The inflow pipe 16 and the outflow pipe 18 are substantially arranged in parallel to one another. The tempering channels 6 are arranged at a rectangular angle relative to the inflow pipe 16 and the outflow pipe 18. Thus, the Z-configuration is provided along the row of tempering channels 6. In another configuration and thus another embodiment of the hydrogen storage assembly 2, the Z-configuration is additionally, or alternatively, provided along columns. With the Z-configuration, the entry 20 and the exit 21 are located on opposite sides of the hydrogen storage assembly 2. Thus, equal path lengths are easily achieved. However, due to production tolerances of the tempering channels 6, these equal path lengths are not enough for providing a hydraulic resistance of all tempering channels 6 within a certain range. Thus, the usage of the passive hydraulic elements 10 is necessary for the hydraulic resistance of all tempering channels 6 being within a certain range. Furthermore, the flow conditions at the first tempering channel 6 and the last, herein rightmost as shown in Fig. 5, tempering channel 6 may not be identical with respect to the fluid intersection 22. Also, at the exit 21 of the tempering channels 6, different effects, such as Venturi effects, may be present differently at different tempering channels 6. Thus, the usage of the additional passive hydraulic elements 10 for ensuring identical hydraulic resistance is needed.

### Reference signs

- 2: hydrogen storage assembly
- 4: hydrogen storage element
- 6: tempering channel
- 10: passive hydraulic element, orifice
- 12: main fluid inlet
- 14: main fluid outlet
- 16: inflow pipe
- 18: outflow pipe
- 20: entry
- 21: exit
- 22: fluid intersection
- 32: piping portion
- 33: vessel portion
- 34: hydrogen storage component
- 35: lateral surface
- 36: inner vessel surface
- 37: central hole
- 38: inner piping surface
- 39: outer vessel surface
- 49: hydrogen storage arrangement
- 50: hydrogen storage system
- 52: electrolyzer
- 53: fuel cell
- 54: tempering circuit
- 55: pump
- 56: tempering device
- 57: support frame
- 58: mounting plate
- 59: support socket
- 100: container

## Claims

1. A hydrogen storage assembly (2) comprising multiple hydrogen storage elements (4) and multiple tempering channels (6), wherein each hydrogen storage element (4) is provided with a tempering channel (6) for tempering the hydrogen storage element (4) with a tempering fluid guided through the tempering channel (6), wherein each tempering channel (6) comprises a hydraulic resistance for the tempering fluid, wherein each tempering channel (6) comprises a passive hydraulic element (10), wherein the hydraulic resistance in each tempering channel (6) is dominated by the passive hydraulic element (10), and wherein all tempering channels (6) with their passive hydraulic elements (10) comprise a hydraulic resistance within a certain range.

2. The hydrogen storage assembly (2) according to claim 1, wherein each passive hydraulic element (10) is an orifice (10) with a certain size and/or shape.

3. The hydrogen storage assembly (2) according to claim 2, wherein the size and/or shape of the orifice (10) is dependent on a number and/or a spatial arrangement of the hydrogen storage elements (4).

4. The hydrogen storage assembly (2) according to any of the preceding claims, wherein the passive hydraulic element (10) is removable from the tempering channel (6) and preferably wherein the hydraulic resistance of the tempering channel (6) with the passive hydraulic element (10) is higher than the hydraulic resistance of the tempering channel (6) without the passive hydraulic element (10).

5. The hydrogen storage assembly (2) according to any of the preceding claims, wherein all passive hydraulic elements (10) have substantially an identical hydraulic resistance.

6. The hydrogen storage assembly (2) according to any of the preceding claims, further comprising a main fluid inlet (12) and a main fluid outlet (14) which are fluidly connected to the tempering channels (6), wherein different fluid paths, preferably all fluid paths, from the main fluid inlet (12) to the main fluid outlet (14) passing through the tempering channels (6) are substantially equally long.

7. The hydrogen storage assembly (2) according to claim 6, further comprising an inflow pipe (16) and an outflow pipe (18), wherein the main fluid inlet (12) is fluidly connected to the tempering channels (6) via the inflow pipe (16), wherein the tempering channels (6) are fluidly connected to the main fluid outlet (14) via the outflow pipe (18), wherein the fluid paths, preferably all fluid paths, comprise a Z-configuration, wherein the tempering channels (6) are substantially arranged in parallel to one another, wherein the inflow pipe (16) and the outflow pipe (18) are substantially arranged in parallel to one another, and wherein the tempering channels (6) are arranged at a certain angle, preferably at a rectangular angle, relative to the inflow pipe (16) and the outflow pipe (18).

8. The hydrogen storage assembly (2) according to claim 7, wherein the tempering channels (6) are arranged in rows and/or columns and wherein the Z-configuration is provided along the rows and/or columns.

9. The hydrogen storage assembly (2) according to any of claims 7 or 8, wherein each tempering channel (6) comprises a passive hydraulic element (10) located at an entry (20) of the tempering channel (6), preferably at or near a fluid intersection (22) of the inflow pipe (16) and the tempering channel (6).

10. A hydrogen storage system (50) comprising a hydrogen storage assembly (2) according to any of claims 1 to 9 and a tempering circuit (54) for circulating a tempering fluid through the tempering channels (6) of the hydrogen storage assembly (2).

11. The hydrogen storage system (50) according to claim 10, further comprising an electrolyzer (52) for generating hydrogen to be stored in the hydrogen storage assembly (2) and a fuel cell (53) for generating electricity on the basis of the hydrogen stored in the hydrogen storage assembly (2).

12. A container (100) comprising a hydrogen storage system (50) according to any of claims 10 or 11.
